# EUROPÄISCHE PATENTANMELDUNG

(11) **EP 1 217 342 A2**
(43) Veröffentlichungstag der Anmeldung: **26.06.2002**
(21) Anmeldenummer: 01124614.7
(22) Anmeldetag: 15.10.2001
(51) Int. Cl.: G01F 23/26, G01F 23/24

(54) **Verfahren zum Erfassen eines Fluides und Sensor zur Durchführung dieses Verfahrens**

(30) Priorität: 05.12.2000 DE 10060419
(71) Anmelder: Beru AG, 71636 Ludwigsburg (DE)
(72) Erfinder: Bantzhaff, Ralf, 71636 Ludwigsburg (DE); Teutsch, Dieter, 71636 Ludwigsburg (DE); Marto, Arno, 71636 Ludwigsburg (DE)
(74) Vertreter: Wilhelms, Rolf E., Dr.

(57) **Zusammenfassung**

Verfahren zum Erfassen eines Fluides insbesondere zum Erfassen des Wassereintritts in das Kraftstoffilter einer Brennkraftmaschine. Ein Sensor dessen elektrische Eigenschaften von dem zu erfassenden Fluid abhängen, wird mit einer hochfrequenten Wechselspannung beaufschlagt und ein elektrischer Wert des Sensors, beispielsweise seine Kapazität oder sein elektrischer Widerstand, wird abgenommen und als Ausgangssignal ausgewertet. Durch das Anlegen einer hochfrequenten Wechselspannung werden elektrolytische Prozesse an den. Elektroden und damit eine entsprechende Korrosion vermieden, die dann auftreten, wenn der Sensor in eine Flüssigkeit getaucht ist, was beispielsweise dann der Fall ist, wenn er den Wassereintritt in ein Kraftstoffilter überwachen soll.

## Beschreibung

Die Erfindung betrifft ein Verfahren zum Erfassen eines Fluides unter Verwendung eines Sensors, dessen elektrische Eigenschaften von dem zu erfassenden Fluid abhängen, bei dem eine elektrische Spannung an den Sensor gelegt und ein elektrischer Wert des Sensors abgenommen und als Ausgangssignal ausgewertet wird, sowie einen Sensor zur Verwendung bei diesem Verfahren.

Aus der DE 3000585 A1 ist ein Verfahren zum Erfassen des Wassereintritts in ein Kraftstoffilter einer Brennkraftmaschine unter Verwendung eines als elektrischer Widerstand ausgebildeteten Sensors bekannt, bei dem eine elektrische Spannung an den Sensor gelegt wird, und die Widerstandsänderung am Sensor in Abhängigkeit von der Wasserhöhe abgenommen und als Ausgangssignal des Sensors ausgewertet wird.

Das Problem bei einem derartigen Verfahren besteht darin, daß bei der Abgabe eines Ausgangssignals vom Sensor, d. h. in seinem leitenden Zustand bei Wassereintritt, ein starker Strom fließt, der zu einer starken Korrosion an der Sensorspitze führt, die den Sensor innerhalb kurzer Zeit unbrauchbar macht. Ein weiterer Nachteil des bekannten Verfahrens besteht darin, daß die entsprechenden Korrosionsprodukte in den Kraftstoff gelangen können und bei den nachgeschalteten Aggregaten Beschädigungen hervorrufen können.

Aus der DE 3231142 A1 ist es weiterhin bekannt, dieses Problem dadurch zu vermeiden, daß der bei der erstmaligen Abgabe eines Signals am Sensor, d. h. beim ersten Wassereintritt auftretende Sensorstrom sofort nach dem Betätigen eines entsprechenden Schaltgliedes beispielsweise eines Anzeigeschaltgliedes unterbrochen wird, wobei der Zustand des Anzeigeschaltgliedes durch eine entsprechende Halteschaltung oder entsprechendes Speicherglied beibehalten wird. Dieses Speicherglied kann beispielsweise ein Widerstand sein, der in seinem Wert dem Widerstand des Sensors im signalabgebenden Zustand entspricht und über den ein entsprechender Strom nach dem Ansprechen des Sensors fließt.

Der Nachteil dieses bekannten Verfahrens besteht jedoch weiterhin darin, daß durch die dauernde Beaufschlagung des Sensors mit einer Spannung die Lebensdauer der Meßelektroden durch die daran auftretenden elektrolytischen Erscheinungen stark begrenzt ist. Bei dem in der DE 3231142 A1 beschriebenen Verfahren ist daher keine dynamische, d. h. kontinuierliche Überwachung möglich.

Die der Erfindung zugrunde liegende Aufgabe besteht daher darin, ein Verfahren der eingangs genannten Art anzugeben, mit dem ein permanenter Betrieb ohne Elektrodenverschleiß durch elektrolytische Prozesse möglich ist. Dadurch ergibt sich beispielsweise auf dem Gebiet der Kraftfahrzeugtechnik eine Kostenersparnis, da die mit hohen Kosten verbundenen Kraftstoffilter nicht regelmäßig, sondern nach Fahrleistung insbesondere nur dann ausgetauscht werden müßten, wenn ein Kraftstoffilter tatsächlich defekt ist.

Diese Aufgabe wird gemäß der Erfindung dadurch gelöst, daß eine hochfrequente Wechselspannung an den Sensor gelegt wird.

Bei dem erfindungsgemäßen Verfahren wird aufgrund der hochfrequenten Wechselspannung, die an die Elektroden des Sensors gelegt wird, vermieden, daß elektrolytische Prozesse an den Elektroden auftreten, wenn die Elektroden bei ihrem Einsatz in eine Flüssigkeit getaucht sind, wie es beispielsweise bei der Überwachung eines Kraftstoffilters auf Wassereintritt der Fall ist.

Bevorzugte Ausgestaltungen des erfindungsgemäßen Verfahrens sind Gegenstand der Ansprüche 2 bis 6.

Durch die Erfindung wird weiterhin ein Sensor zur Verwendung bei dem erfindungsgemäßen Verfahren geschaffen, der Gegenstand der Ansprüche 7 bis 10 ist.

Im folgenden wird anhand der zugehörigen Zeichnung ein besonders bevorzugtes Ausführungsbeispiel der Erfindung näher beschrieben. Es zeigen
Fig. 1 eine Längsschnittansicht durch einen Wassersensor und
Fig. 2 das Blockschaltbild einer Anordnung zur Durchführung des erfindungsgemäßen Verfahrens mittels eines derartigen Wassersensors.

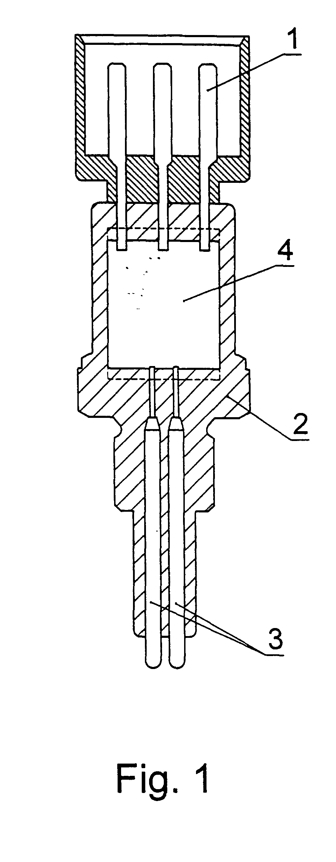

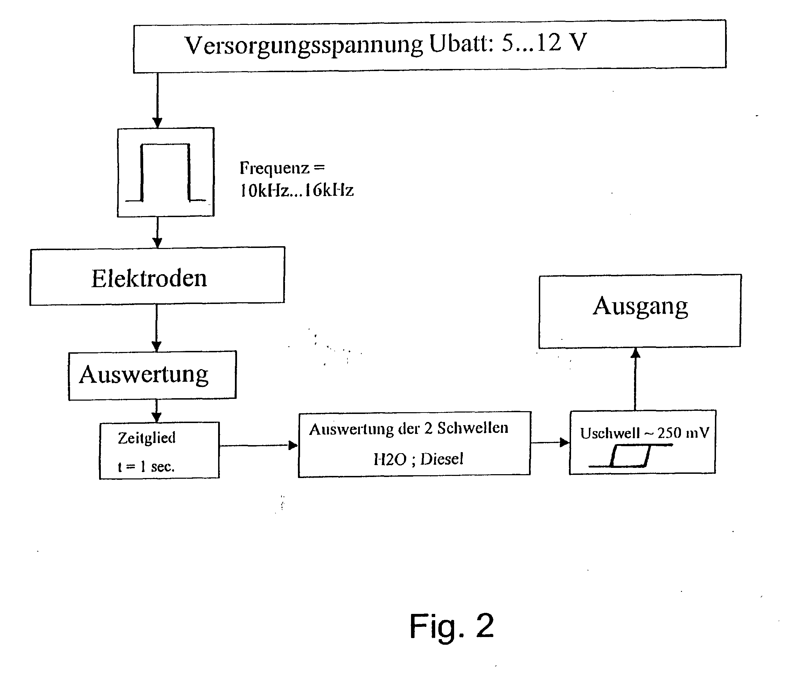

Wie es im einzelnen in Fig. 2 dargestellt ist, wird bei einer Kraftstoffilterüberwachung in einem Kraftfahrzeug auf Wassereintritt in das Kraftstoffilter, um eine automatische Filterentleerung und dauernde Überwachung zu ermöglichen, die Versorgungsspannung des Kraftfahrzeuges von 5 bis 12 Volt in eine hochfrequente Wechselspannung umgewandelt, die an die Elektroden 3 des in Fig. 1 dargestellten Sensors gelegt wird. Die Frequenz der hochfrequenten Wechselspannung liegt vorzugsweise zwischen 1 kHz und etwa 20 kHz insbesondere zwischen 12 kHz und 16 kHz und bei dem in Fig. 2 dargestellten Beispiel zwischen 10 kHz und 16 kHz.

Der Sensor ist so ausgebildet, daß sich ein elektrischer Wert, beispielsweise seine Kapazität oder sein elektrischer Widerstand, in Abhängigkeit von dem zu erfassenden Fluid, d. h. bei dem vorliegenden Ausführungsbeispiel beim Wassereintritt ändert. Dieser Wert wird abgenommen und als Ausgangssignal des Sensors ausgewertet.

Wie es in Fig. 2 weiterhin dargestellt ist, ist im Auswertezweig ein Zeitglied enthalten, dessen Zeitkonstante vorzugsweise bei 1 s liegt.

Die elektronische Auswerteschaltung kann so ausgebildet sein, daß unterschiedliche Schwellenwerte je nach dem eingestellt werden können, ob Wasser, destilliertes Wasser, Dieselkraftstoff oder Luft erfaßt werden soll.

Bei einer derartigen Ausbildung können das Verfahren und die entsprechende Anordnung im Fahrzeugbau, zum Beispiel beim Kraftstoffilter, der Luftansaugung, aber auch in der Haustechnik, zum Beispiel zur Überprüfung des Ölstandes im Öltank einer Heizung, verwendet werden.

Die Auswertung, ob ein Fluid vorhanden ist, d. h. ob sich beispielsweise eine leitende Flüssigkeit oder Luft in einem Kraftstoffilter befindet, erfolgt über eine Anzeige vorzugsweise über ein Leuchtdiodenanzeige, die Ansteuerung einer Pumpe zum Abpumpen des erfaßten Fluides u.s.w.

Um Probleme bezüglich der elektromagnetischen Verträglichkeit, d. h. EMV-Probleme bei der Beaufschlagung des Sensors mit einer Wechselspannung beim Einsatz in einem Kraftfahrzeug zu verhindern, ist vorzugsweise der Sensor massefrei, d. h. so ausgebildet, daß die Messtrecke zwischen zwei Elektroden3 liegt, die beide nicht mit der Fahrzeugmasse verbunden sind. Weiterhin ist es bevorzugt, daß die wechselspannungserzeugende Elektronik im Sensor integriert ist, was die Erzeugung der möglicherweise störenden Wechselspannung an der Messtrecke konzentriert und somit EMV-Probleme verhindert.

Wie es weiterhin in Fig. 1 dargestellt ist, ist die Auswerteelektronik 2 im Sensor integriert und mit einem Steckerteil 1 verbunden, an dem das Ausgangssignal des Sensors abgenommen wird und die Versorgungsspannung anliegt.

Bei dem erfindungsgemäßen Verfahren wird durch die Verwendung einer hochfrequenten Wechselspannung verhindert, daß elektrolytische Prozesse beim Messvorgang an den in eine Flüssigkeit beispielsweise beim Einsatz in einem Kraftstoffilter in den Kraftstoff getauchten Elektroden 3 auftreten, was zur Folge hat, daß die Lebensdauer des Sensors erheblich verlängert ist. Der Sensor kann daher permanent betrieben werden, ohne daß seine Elektroden 3 durch elektrolytische Prozesse verschleißen.

Ein weiterer Vorteil des erfindungsgemäßen Verfahrens besteht darin, daß durch das Einstellen verschiedener Schwellenspannungen in der Auswerteschaltung verschiedene Fluide, beispielsweise Kraftstoff, insbesondere Dieselkraftstoff, Luft oder Wasser, erfaßt werden können, was insbesondere für den Einsatz in einem Kraftstoffilter günstig ist.

Als Meßsignal kann eine Spannung abgegriffen werden, die im Voltbereich liegt und daher gut auswertbar ist. Versuche haben gezeigt, daß verschiedene Fluide zu deutlich unterschiedlichen Meßsignalen führen, die in bekannter Weise ausgewertet angezeigt oder weiterbearbeitet werden können. Versuche haben zum Beispiel bei Wasser bei 10,2 Volt, bei destilliertem Wasser bei 8,2 Volt, bei Dieselkraftstoff bei 1,2 Volt und bei Luft bei 200 Millivolt jeweils ergeben. Dabei konnte kein meßbarer Verschleiß an den Elektroden festgestellt werden.

## Patentansprüche

1. Verfahren zum Erfassen eines Fluides unter Verwendung eines Sensors, dessen elektrische Eigenschaften von dem zu erfassenden Fluid abhängen, bei dem eine elektrische Spannung an den Sensor gelegt und ein elektrischer Wert des Sensors abgegriffen und als Ausgangssignal ausgewertet wird, **dadurch gekennzeichnet, daß** eine hochfrequente Wechselspannung an den Sensor gelegt wird.

2. Verfahren nach Anspruch 1, **dadurch gekennzeichnet, daß** die Frequenz der Wechselspannung zwischen etwa 1 kHz und etwa 20 kHz liegt.

3. Verfahren nach Anspruch 2, **dadurch gekennzeichnet, daß** die Frequenz zwischen etwa 10 kHz und etwa 16 kHz liegt.

4. Verfahren nach Anspruch 3, **dadurch gekennzeichnet, daß** die Frequenz zwischen etwa 12 kHz und etwa 16 kHz liegt.

5. Verfahren nach Anspruch 1, **dadurch gekennzeichnet, daß** der vom Sensor abgegriffene elektrische Wert die Kapazität ist.

6. Verfahren nach Anspruch 1, **dadurch gekennzeichnet, daß** der vom Sensor abgegriffene elektrische Wert der elektrische Widerstand ist.

7. Sensor zur Verwendung bei dem Verfahren nach Anspruch 1, **gekennzeichnet durch** eine Ausbildung als elektrische Kapazität.

8. Sensor zur Verwendung bei dem Verfahren nach Anspruch 1, **gekennzeichnet durch** eine Ausbildung als elektrischer Widerstand.

9. Sensor nach Anspruch 7 oder 8, **dadurch gekennzeichnet, daß** eine hochfrequente Wechselspannung erzeugende Einheit integriert ist.

10. Sensor nach einem der Ansprüche 6 bis 9 zur Verwendung bei einem Kraftfahrzeug, **dadurch gekennzeichnet, daß** der Sensor zweipolig ausgeführt ist und keiner der Pole an Fahrzeugmasse liegt.
